# EUROPEAN PATENT APPLICATION

(11) **EP 1 018 417 A1**
(43) Date of publication of application: **12.07.2000**
(21) Application number: 99200030.7
(22) Date of filing: 07.01.1999
(51) Int. Cl.: B29C 33/40, B29C 33/56, B29C 33/00, B29C 33/62, B29C 44/58, B29C 44/46

(54) **Coated mould for making polyurethane foams**

(71) Applicant: SHELL INTERNATIONALE RESEARCH MAATSCHAPPIJ B.V., 2596 HR Den Haag (NL)
(72) Inventor: Bastin, Benoit Etienne Jean-Marie Ghislain,, 1348 Ottignies, Louvain-La-Neuve (BE); Clerinx, Johannes Eduard Irene Marie Jozefa,, 1348 Ottignies, Louvain-La-Neuve (BE)

(57) **Abstract**

Casing for preparing articles of flexible polyurethane foam, characterized in that the inner wall of the casing comprises polyalkene, most preferably polypropene. This may imply that the inner wall is a layer of polyalkene material attached to the inside of the casing or that the entire casing is made of polyalkene.

The casing may be a trough, a mixing head, a box or a mould. If it is a trough or mixing head it is very useful in continuous slabstock production process. If the casing is a box or a mould it can be used in respectively box foaming processes and cold cure moulding processes.

## Description

The present invention relates to a casing for preparing articles of flexible polyurethane foam and to the use thereof in a process for preparing such articles of flexible polyurethanes.

The expression "casing" as used throughout this application relates to every form of casing, wherein a flexible polyurethane foam formulation is poured and optionally also expands into a foam. Thus, the expression "casing" includes a trough or mixing head containing the foam formulation in continuous slabstock production before it is poured onto a conveyor belt for expansion; it also includes a box used in the discontinuous production of flexible slabstock foams as well as moulds used to prepare shaped articles of flexible polyurethane foams, in particular moulds used in cold cure moulding.

Flexible slabstock polyurethane foams are widely used in numerous applications. A very important application is their use in mattresses and cushions for furniture. Both continuously and discontinuously produced slabstock foams can be used for these purposes.

The continuous and discontinuous slabstock production processes are well known. In continuous slabstock production the components of a foam formulation are normally brought together in a mixing head where they are mixed and from which the formulation is subsequently poured onto a moving conveyor belt, normally covered with paper. Often a traversing mixing head is used in order to pour the foam formulation onto the entire breadth of the conveyor belt. From the mixing head the foam formulation may also be charged into a trough from which the foam formulation subsequently flows via a downwardly sloping fall plate onto a lower situated, horizontally moving conveyor belt. The foam formulation expands on the conveyor belt and is often covered with a top layer of paper. After a certain length the foam thus produced is cut. In discontinuous slabstock production either the components of a flexible polyurethane formulation are poured into a shaped box (e.g. a square or cylindrically shaped box) and mixed or the components are mixed and then poured into the shaped box, after which the foam is formed. After expansion the foam is removed from the box for subsequent handling.

Shaped articles made of flexible polyurethane foam are widely used in numerous applications. Main sectors of application are the automotive and aircraft industry, upholstered furniture and technical articles. For instance, full foam seats, top pads for the seats and restraints for back and head, all made from flexible polyurethane foam, are widely used in cars and aeroplanes. Other applications include the use of flexible polyurethane foam as carpet backings, foamed seat saddles for motorbikes, gaskets between a car body and its lights, lip seals of air filters for engines and insulating layer on car parts and engine parts to reduce sound and vibration.

The shaped articles of flexible polyurethane referred to in the previous paragraph foam are typically made in a mould, usually made of steel. In slabstock production the trough or mixing head and the box are also typically made of steel. As indicated above, box, trough, mixing head and mould will further be referred to by the common name "casing".

The polyurethane reactants (i.e. polyol, polyisocyanate and usual ancillary chemicals, like urethane catalysts, blowing agents, surfactants and the like) are introduced into the casing. When the casing is a box or mould, foaming will occur in the casing once it is filled with the flexible polyurethane foam formulation. After the foam has sufficiently gelled in slabstock production or cooled down in moulding applications, it is released from the casing. Releasing agents are normally brought onto the inner walls of a casing in order to enable a proper removal of the foam from the casing without too much polyurethane foam remaining behind on the inner wall. A typical releasing agent used in slabstock foam production is polyol and suitably the same polyol as used in the foam formulation. Typical releasing agents used in cold cure moulding are dispersion of solids in low boiling solvents such as methylene chloride, hexane, pentane and isopentane. In addition to releasing agents more polyisocyanate than would be necessary from a stoichiometric point of view is also normally added, thus increasing the isocyanate index. The additional amount of polyisocyanate causes the polyurethane foam to be more reactive (so a more rapid gellation) and less sticky, thus also favouring a proper removal from the casing.

When the casing is a trough or mixing head no substantial foaming takes place in the casing. However, upon pouring the foam formulation from the casing, small amounts of foam formulation will remain behind on the inner walls and will react into foam, thus causing fouling of these inner walls. This fouling will necessitate a periodic cleaning and experience has shown that such cleaning is very time-consuming.

Despite these measures being taken, the inner wall of a casing is rapidly fouled with polyurethane foam. It is commonly accepted that the inner wall of such a casing must be regularly cleaned. In discontinuous slabstock production every box even has to be cleaned quickly after a foam has been produced in it, while a major cleaning must be done every day. Cleaning takes a considerable effort and thus takes manpower. For instance, experience has shown that it takes 5 to 10 minutes for one person to clean a box after a foam production and 30 to 45 minutes each day for 3 to 4 persons to clean the inner wall of a cylindrically shaped steel box with a height of about 2.5 metres and a width of approximately 1.5 metres. The residual polyurethane foam recovered by the cleaning is waste and has to be disposed of. This is a loss of potentially valuable product and moreover is not a desirable situation from an environmental point of view.

Accordingly, it would be very beneficial if the above identified problems associated with producing articles of flexible polyurethane foam involving the use of a casing could be avoided or anyhow significantly reduced. Thus, it would be beneficial if polyurethane articles could be produced in a casing without substantial amounts of residual polyurethane remaining behind on the inner wall of the casing. This would reduce the manpower and cost involved in cleaning of the casing and would reduce the amount of waste produced and releasing agent used.

Surprisingly, it was found that this could be achieved by applying a casing having an inner wall of polyalkene material.

Accordingly, the present invention relates to a casing for preparing articles of flexible polyurethane foam, characterized in that the inner wall of the casing comprises polyalkene.

The advantages achieved with the casing according to the present invention are pronounced. First of all, the amount of releasing agent used is significantly reduced and in certain instances can even be completely dispensed with. Secondly, the stress within the foam during the rise of the foam in the casing, which may lead to splitting of the foam and hence to an inferior product, is decreased substantially. Thirdly, as a result of the polyalkene inner wall, the time for cleaning and maintenance of the casing is reduced drastically and so is the amount of waste material. Needless to say that this is both beneficial from an economic as well as from an environmental perspective. A still further advantage is that the foam can be prepared with a lower isocyanate index than before, thus being able to reduce the exotherm (i.e. the amount of heat generated) of the foaming reaction and hence the scorch within the foam. The lower amount of polyisocyanate, namely, enables a better temperature control within the reaction mixture during foaming, which leads to a reduced occurrence of scorch.

The casing may have any dimension applied in commercial operation. For instance, when the casing is a mould it may have any dimension normally applied for the production of shaped articles like seats, top pads for the seats and restraints for back and head of such seats. When the casing is a box for discontinuous slabstock foam production, it may have any dimension normally applied for such boxes.

The casing has a polyalkene inner wall. This means that either a separate inner wall of a certain thickness is attached to the inside of the casing or that the entire casing consists of polyalkene. In the latter case a further advantage is that one can see the foam rise when the casing is a box or a mould, thus being to better control the foaming process. When the polyalkene inner wall is a separate inner wall, it can be attached to the inside of the outer wall of the casing by any suitable connecting means known in the art, such as by gluing, by means of screws, nails or perhaps even staples. Using screws has been proven to be very convenient and effective.

The thickness of the polyalkene inner wall slightly depends on the size of the casing and on the fact whether the entire casing is made of polyalkene or whether a separate inner wall of polyalkene material attached to the inside of the casing's outer wall is used. In general, when the casing is made of polyalkene material, the wall thickness should be sufficient to give the casing the required mechanical strength. If the polyalkene material is applied as a separate inner layer, a thickness of at least 0.1 mm has been found to already provide the advantages indicated above. Suitably, however, the polyalkene (inner) wall has a thickness from 0.1 to 5 cm while a thickness of from 0.5 to 3 cm has been found particularly useful. Namely, using such thickness on the one hand enables a quick and easy fixing of the polyalkene layer to the inside of the casing, while at the same time the coating has sufficient strength and stiffness. On the other hand, such thickness is normally also sufficient to impart sufficient mechanical strength to the casing entirely made of polyalkene material. If used as separate inner wall, several plates of polyalkene coating material may be needed to cover the inner wall of the casing. In such a case the different plates should preferably be fixed to the said inner wall in such a way that their outer edges are close to each other and preferably touch each other.

The polyalkene used can in principle be any polyalkene known to be useful for preparing films or sheets. Suitable polyalkenes, thus, include polyethene, polypropene, polybutene, ethene/propene copolymers, copolymers of propene and other alkene comonomers and mixtures of two or more of these polyalkenes. If propene, butene or even higher olefins are polymerized, the resulting polymer may have different stereoregular structures: isotactic, syndiotactic or atactic. For the purpose of the present invention the isotactic, the syndiotactic as well as the atactic form may be applied. Furthermore, homophasic as well as heterophasic polyalkenes may be applied. Particularly those polyalkenes are preferred which can be extruded and hence are suitable for extrusion applications. Of the polyalkenes mentioned polyethene, polypropene and ethene/propene copolymer are preferred with polypropene, especially heterophasic polypropene, being particularly preferred.

As already indicated above the casing can be a box for use in discontinuous slabstock production of flexible polyurethane foam, a mould for use in the production of shaped articles of flexible polyurethane foam by cold cure moulding or a trough or mixing head for use in continuous slabstock production of flexible polyurethane foam. It has been found particularly useful to employ the polyalkene material for boxes and moulds.

The present invention also relates to a process for the preparation of shaped articles of flexible polyurethane comprising introducing a suitable polyol component, a suitable polyisocyanate component and suitable ancillary chemicals into a casing having a polyalkene inner wall and releasing the shaped polyurethane article from the casing after the polyurethane foam has been built up, i.e. after the foam no longer rises in the box. The various components may be introduced into the casing as individual components, as a mixture of all components or as a combination of individual component(s) and one or more mixtures of two or more components.

If the casing used in the above process is a box, the various components will usually be premixed before being poured into the box. In commercial box foam processes, the reaction mixture will normally remain in the box for about 5 to 15 minutes after which the foam formed is removed from the box and is allowed to cool. Obviously, the time the foam remains in the box should not be too long in order to enable a high production of box foams. On the other hand, it should also not be too short in order to allow the polyurethane foam to build up.

In a still further aspect the present invention also relates to a continuous slabstock production process, wherein a suitable polyol component, a suitable polyisocyanate component and suitable ancillary chemicals are introduced into a trough or mixing head as described above, after which the resulting mixture is poured onto a conveyor belt where the mixture expands into a flexible polyurethane slabstock foam.

Suitable polyol components are those comprising at least one polyol normally applied for preparing flexible polyurethane foams, i.e. a flexible polyol. The flexible polyol may be a polyester polyol or a polyether polyol. Very good results, however, have been achieved when polyether polyols (or polyoxyalkylene polyols) are used. Suitably the polyol component comprises one flexible polyol or a blend of two or more of such polyols. Alternatively, the polyol component can also comprise, or even completely consist of, a so called polymer polyol. A polymer polyol consists of a base polyol with a polymer stably dispersed therein. The base polyol is a flexible polyol, while the polymer normally is a styrene-acrylonitril polymer, polystyrene, polyurea and polyurethane polymers and the condensation product of triethanol amine and toluene diisocyanate (TDI). The dispersed polymer is suitably present in an amount of from 5 to 40% by weight based on total weight of polymer polyol.

Flexible polyether polyols, then, typically are based on polymerization products of propylene oxide, optionally together with ethylene oxide. Such polyols typically have a molecular weight of at least 2,500 and suitably at most 6,500, and an average nominal functionality (En) of at least 2.0, more suitably from 2.5 to 6.0. Primary hydroxyl content and ethylene oxide content are not particularly critical and may also depend on the application foreseen for the polyurethane foam to be prepared. Thus, both primary hydroxyl content and ethylene oxide content may have any value from 0% to 100%.

In addition to the flexible polyol described above, a hydrophilic flexible polyol may be present. Suitable hydrophilic polyols typically have a molecular weight in the range of from 2000 to 5500, an ethylene oxide content of at least 40% by weight and a primary hydroxyl content of at least 50%. Preferred hydrophilic polyols to be used as component (b) are those having a molecular weight in the range of from 3000 to 5000, an ethylene oxide content of from 50 to 80% by weight and a primary hydroxyl content of from 70 to 95%.

Ancillary chemicals that are normally present include the conventional additional components and auxiliaries useful in the production of flexible polyurethane foams. Additional components are foaming (or polyurethane) catalysts and/or a cross-linking agents. Auxiliaries like fillers, flame retardants, foam stabilisers (surfactants), blowing agents and colorants may be present as well. The nature of these components are well known in the art. An extensive list of polyurethane catalysts is, for instance, given in US patent specification No. 5,011,908 and includes tin catalysts and tertiary amine catalysts, normally used in an amount of 0.01 to 2.0 php (parts by weight per 100 parts by weight of polyol). Crosslinking agents often applied in the production of polyurethane foams are polyfunctional glycol amines, such as diethanol amine. If used at all, the cross-linking agent is applied in amounts up to 3.0 php. Suitable blowing agents include water, aceton, (liquid) carbon dioxide, halogenated hydrocarbons, aliphatic alkanes and alicyclic alkanes. The amounts wherein the blowing agents other than water are to be used are those conventionally applied, i.e. between about 0.1 and 20 php. Water can be used in amounts up to 6 php or even higher, while in flexible foam formulations for casing applications 4 php is normally considered the upper limit. Frequently applied foam stabilisers are the organosilicone surfactants and they are used in an amount of up to 5% by weight based on the reaction mixture of polyol reactant and polyisocyanate reactant.

Polyisocyanates that may be used are those conventionally applied in the production of flexible polyurethane foams. Useful polyisocyanates should contain at least two isocyanate groups and include both aliphatic -usually alkylene- and aromatic di-, tri-, tetra- and higher isocyanates known in the art to be suitably applied in the production of flexible polyurethane foams. Mixtures of two or more of such aliphatic and/or aromatic polyisocyanates may also be applied. Examples of suitable polyisocyanates, then, include 2,4-toluene diisocyanate (2,4-TDI), 2,6-TDI, mixtures of 2,4-TDI and 2,6-TDI, 4,4'-diphenylmethane diisocyanate (MDI) and polymeric MDI, a mixture of polyisocyanates with MDI as the main component.

The reaction between polyol and polyisocyanate typically takes place at an isocyanate index (i.e. the equivalence ratio of cyanate groups to hydroxyl groups) of from 80 to 120, suitably 85 to 110.

The present invention, finally, also relates to the use of polyalkene in a coating applied onto the inner wall of a casing for preparing shaped articles of flexible polyurethane. Suitable polyalkenes are those described above with polyethylene, polypropylene and ethylene/propylene copolymer being preferred. Of these polypropene, and especially heterophasic polypropene, is particularly preferred.

The invention will now be illustrated by the following examples without limiting the scope of the invention to these particular embodiments.

### Example

In a discontinuous process for preparing polyurethane box foams, a polyol formulation and an isocyanate component were mixed in a mixing vessel by stirring, the stirrer was subsequently withdrawn and when the foaming reaction started, the reaction mixture was poured into a cylindrically shaped steel box having a height of 2.4 metres and an outer diameter of 1.6 metres. A 3 mm thick layer of heterophasic polypropene having a melting point of 165 °C (Molpen EP-S 31 HP; Molpen is a trademark) was attached with screws to the inner wall of the steel box.

The polyol formulation had the following composition:
100 pbw CARADOL SC46-02 (a flexible polyol ex Shell Chemicals; CARADOL is a trademark),
4.5 pbw water
1.0 pbw Silicone BF2370 (trademark; silicone surfactant)
0.22 pbw stannous octoate
0.25 pbw dimethyl ethanolamine.

The isocyanate added was CARADATE 80, a 80/20 mixture of 2,4-TDI and 2,6-TDI, in such amount that the isocyanate index was 102 (CARADATE is a trademark).

Approximately 10 minutes after the reaction mixture was poured into the box, the foam formed was removed from the box and was allowed to cool. Only a few traces of polyurethane foam were visually detected on the inside of the polypropene inner wall of the box. The box could be used again without cleaning.

### Comparative Example

The above example was repeated, except that no polypropene layer was used as inner wall in the box.

After the foam had been removed from the box (10 minutes after the reaction mixture was poured into the box) substantial quantities of polyurethane foam remained behind on the inner steel wall of the box, thus making it necessary to clean the box before it could be used again.

## Claims

1. Casing for preparing articles of flexible polyurethane foam, characterized in that the inner wall of the casing comprises polyalkene.

2. Casing according to claim 1, characterized in that the inner wall is a layer of polyalkene material attached to the inside of the casing.

3. Casing according to claim 2, characterized in that the inner wall has a thickness of at least 0.1 mm, preferably from 0.1 to 5 cm.

4. Casing according to claim 1, characterized in that the entire casing is made of polyalkene.

5. Casing according to any one of claims 1-4, characterized in that the polyalkene is polyethylene, polypropylene or ethylene/propylene copolymer, preferably polypropylene.

6. Casing according to any one of claims 1-5 in the form of a box for use in discontinuous slabstock production of flexible polyurethane foam.

7. Casing according to any one of claims 1-5 in the form of a mould for use in the production of shaped articles of flexible polyurethane foam by cold cure moulding.

8. Casing according to any one of claims 1-5 in the form of a trough or mixing head for use in continuous slabstock production of flexible polyurethane foam.

9. Process for the preparation of articles of flexible polyurethane foam comprising introducing a suitable polyol component, a suitable polyisocyanate component and suitable ancillary chemicals into a casing as claimed in any one of claims 1-7 and releasing the polyurethane article from the casing after the polyurethane foam has been built up.

10. Continuous slabstock production process, wherein a suitable polyol component, a suitable polyisocyanate component and suitable ancillary chemicals are introduced into a casing as claimed in claim 8, after which the resulting mixture is poured onto a conveyor belt where the mixture expands into a flexible polyurethane slabstock foam.

11. Use of polyalkene as the inner wall of a casing for use in a process for preparing articles of flexible polyurethane foam.

12. Use according to claim 11, characterized in that the polyalkene is polyethylene, polypropylene or ethylene/propylene copolymer, preferably polypropylene.
